# EUROPÄISCHE PATENTSCHRIFT

(11) **EP 1 943 714 B1**
(45) Veröffentlichungstag und Bekanntmachung des Hinweises auf die Patenterteilung: **02.12.2009**
(21) Anmeldenummer: 06807509.2
(22) Anmeldetag: 24.10.2006
(51) Int. Cl.: H02K 9/24, H02P 9/10, G01H 1/00, G01K 1/02

(54) **VERFAHREN ZUM AUTOMATISCHEN ÜBERWACHEN EINES GENERATORBETRIEBS**
METHOD FOR AUTOMATIC MONITORING OF GENERATOR OPERATION
PROCÉDÉ DE SURVEILLANCE AUTOMATIQUE DU FONCTIONNEMENT D' UN GÉNÉRATEUR

(30) Priorität: 31.10.2005 EP 05023759
(43) Veröffentlichungstag der Anmeldung: 16.07.2008
(73) Patentinhaber: SIEMENS AKTIENGESELLSCHAFT, 80333 München (DE)
(72) Erfinder: LEHMANN, Christoph, 47506 Neukirchen-Vluyn (DE)
(86) Internationale Anmeldenummer: PCT/EP2006/067714
(87) Internationale Veröffentlichungsnummer: WO 2007/051732

(56) Entgegenhaltungen:
- JP-A- 4 164 295
- JP-A- 11 150 993
- SE-C2- 525 570
- US-A1- 2006 038 539

## Beschreibung

Die vorliegende Erfindung bezieht sich auf ein Verfahren zum automatischen Überwachen eines Generatorbetriebs sowie auf ein entsprechendes Überwachungssystem.

Generatoren, also Geräte, die aus Bewegungsenergie elektrische Energie erzeugen, sind im Stand der Technik allgemein bekannt. Ein an der Generatorwelle anliegendes Drehmoment dreht im Inneren des Generators eine Spule in einem Magnetfeld, das durch das dynamoelektrische Prinzip erregt werden kann, und erzeugt durch Induktion elektrische Spannung. Ist ein Verbraucher an den Generator angeschlossen, so fließt ein elektrischer Strom.

Großtechnische Generatoren umfassen im Wesentlichen einen Stator, einen Rotor sowie Lagerböcke, die den Rotor aufnehmen. Über seine Welle wird dem Rotor mechanische Leistung zugeführt, wie beispielsweise von einer Turbine oder von einem Verbrennungsmotor, wodurch der Rotor auf Betriebsdrehzahl gehalten wird und sich innerhalb des Stators dreht, wodurch in jeder Phase der dreipoligen Statorwicklung durch Induktion eine Wechselspannung erzeugt wird. Durch den Versatz der Statorspulen um jeweils 120° wird ein entsprechender dreiphasiger Drehstrom erzeugt.

Der Generator kann als Synchrongenerator oder als Asynchrongenerator ausgeführt sein. Beim Synchrongenerator besitzt der Rotor eine von außen über Schleifkontakte mit Gleichstrom versorgte Erregerwicklung. Beim Asynchrongenerator hingegen ist der Rotor als Käfigläufer ausgeführt.

Beim Betrieb derartiger Generatoren können sich die Betriebsdaten des Generators ändern. Dabei kann jedoch nicht sofort erkannt werden, ob die Änderungen auf veränderte Randbedingungen oder auf eine Störung im Generator selbst zurückzuführen sind, da die Generatorbetriebsdaten von vielen Randbedingungen abhängig sind, wie beispielsweise von der Last, den Netzdaten, den Kühlmitteldaten oder dergleichen.

Bei starken Änderungen von Generatorbetriebsdaten ist es üblich, dass sich der Betreiber zunächst an den Generatorlieferanten wendet, bei dem er dann eine Analyse der geänderten Generatorbetriebsdaten durch Experten durchführen lässt, um festzustellen, ob der Generator selbst beschädigt ist. Ist dies der Fall, so muss der Generator zur Überprüfung abgeschaltet und gegebenenfalls repariert werden. Ergibt die Analyse hingegen, dass der Generator selbst keine Störungen aufweist, so kann dieser weiter betrieben werden. Ein Nachteil dieser Vorgehensweise besteht darin, dass eine solche Expertenanalyse zeitaufwendig und teuer ist. Die Dokumente SE 525 570 oder US 2006 038 539, und JP 4 164 295 und JP 11 150 993 schlagen daher die Verwendung von Systemmodellen vor.

Es ist daher eine Aufgabe der vorliegenden Erfindung, Mittel bereitzustellen, die sicherstellen, dass ein Generator nur dann von Experten analysiert werden muss, wenn starke Änderungen der Generatorbetriebsdaten tatsächlich auf eine Störung im Generator selbst zurückzuführen sind.

Zur Lösung dieser Aufgabe schafft die vorliegende Erfindung ein Verfahren zum automatischen Überwachen eines Generatorbetriebs nach Anspruch 1 sowie ein entsprechendes System nach Anspruch 6. Die abhängigen Ansprüche beziehen sich auf individuelle Ausgestaltungen des erfindungsgemäßen Verfahrens bzw. des erfindungsgemäßen Systems.

Bei dem Verfahren zum automatischen Überwachen eines Generatorbetriebs gemäß der vorliegenden Erfindung werden zunächst Generatoreingangsgrößen mit Hilfe geeigneter Sensorik erfasst. Unter dem Begriff "Generatoreingangsgrößen" werden vorliegend Generatorbetriebswerte verstanden, die die Randbedingungen definieren, unter denen der Generator betrieben wird. Dazu gehören beispielsweise die Ständerspannung, der Ständerstrom, die Netzfrequenz, die Ständerwicklungstemperatur, die Kühlwassereintrittstemperatur, die Dichtöleintrittstemperatur oder dergleichen. Die Generatoreingangsgrößen fassen also sämtliche Einflüsse zusammen, die von außen auf den Generator einwirken können.

Basierend auf diesen erfassten Generatoreingangsgrößen werden Soll-Generatorausgangsgrößen berechnet. Unter dem Begriff "Generatorausgangsgrößen" fallen diejenigen Generatorbetriebswerte, die Belastungen der Generatorkomponenten beschreiben, wie beispielsweise die Ständerwicklungstemperatur, die Lagertemperaturen, die Wellenschwingungsamplituden, die Wickelkopfschwingungsamplituden oder dergleichen. Die Generatorausgangsgrößen fassen demnach all diejenigen Einflüsse zusammen, die Auswirkungen auf den Generator selbst haben und gegebenenfalls eine Störung im Generator verursachen können.

Die Berechnung der Soll-Generatorausgangsgrößen erfolgt vorteilhaft mit Hilfe einer geeigneten Software, die Verknüpfungen zwischen den Generatoreingangs- und den Generatorausgangsgrößen beschreibt, wie beispielsweise anhand mathematischer Gleichungen. Diese Verknüpfungen können entweder durch theoretische Betrachtungen oder durch entsprechende Messungen ermittelt werden. Dazu werden beispielsweise bei einem intakten Generator die Generatoreingangsgrößen variiert und die Generatorausgangsgrößen beobachtet. Auf diese Weise können Soll-Generatorausgangsgrößen berechnet werden, vorzugsweise mit einem entsprechenden Toleranzbereich.

Ferner werden gemäß dem erfindungsgemäßen Verfahren die Ist-Generatorausgangsgrößen mittels geeigneter Sensorik erfasst und mit dem berechneten Soll-Generatorausgangsgrößen verglichen. Ergibt die Auswertung des Vergleichsergebnisses, dass die Ist-Generatorausgangsgrößen innerhalb des Toleranzbereiches der Soll-Generatorausgangsgrößen liegen, so liegt bei dem Generator selbst offensichtlich keine Störung vor. Weichen die Ist-Generatorausgangsgrößen hingegen von den Soll-Generatorausgangsgrößen ab, so ist der Generator defekt und muss einer entsprechenden Prüfung unterzogen werden.

Ein wesentlicher Vorteil des erfindungsgemäßen Verfahrens zum automatischen Überwachen eines Generatorbetriebs besteht darin, dass der Generator automatisiert in allen seinen Betriebspunkten auf einwandfreie Funktion überprüft werden kann. Versuche haben gezeigt, dass bei einigen Soll-Generatorausgangsgrößen sehr große Toleranzbereiche zugelassen werden können, ohne die Funktion des Generators selbst zu gefährden. Entsprechend können selbst stark schwankende Generatorbetriebsdaten noch im zulässigen Bereich liegen, bei denen der Generator nach bisheriger Vorgehensweise bereits einer Überprüfung unterzogen worden wäre. In vielen Fällen kann aufgrund des erfindungsgemäßen Verfahrens demnach auf eine Analyse der geänderten Generatorbetriebsdaten durch entsprechende Experten verzichtet werden, wodurch Zeit und Kosten eingespart werden.

Ferner bezieht sich die vorliegende Erfindung auf ein System zum automatischen Überwachen eines Generatorbetriebs, das bei der Durchführung des erfindungsgemäßen Verfahrens verwendet werden kann. Das System umfasst Sensoren zum Erfassen von Generatoreingangsgrößen, eine Rechnereinheit, die derart eingerichtet ist, dass basierend auf mittels der Sensoren erfassten Generatoreingangsgrößen Soll-Generatorausgangsgrößen berechnet werden können, Sensoren zum Erfassen der Ist-Generatorausgangsgrößen, eine Vergleichseinheit, die derart eingerichtet ist, dass die erfassten Ist- mit den berechneten Soll-Generatorausgangsgrößen verglichen werden, und eine Auswertungseinheit zum Auswerten der Vergleichsergebnisse. Bevorzugt sind die Rechnereinheit, die Vergleichseinheit und die Auswertungseinheit einteilig ausgebildet, beispielsweise in Form eines herkömmlichen PCs, der ein entsprechendes Berechnungs-, Vergleichs- und Auswertungsprogramm umfasst.

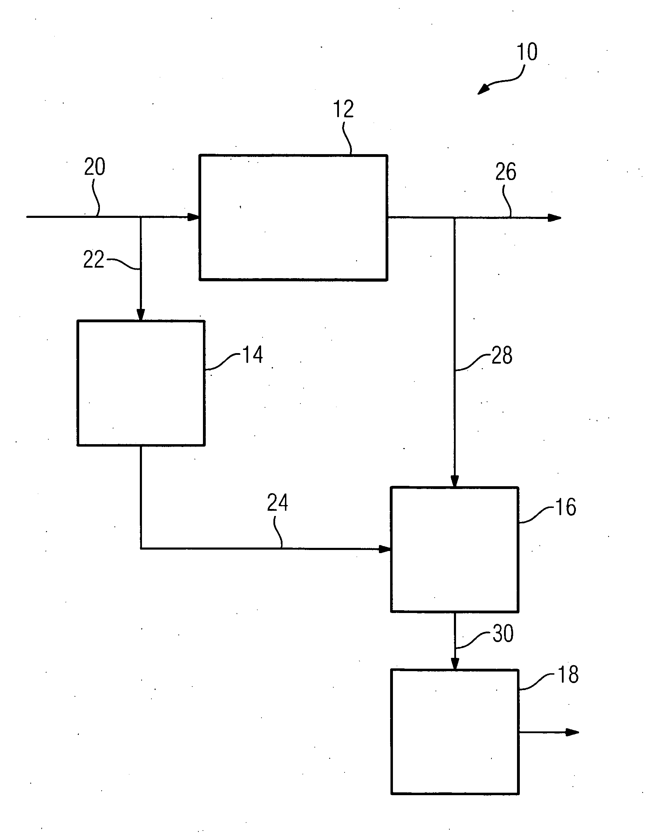

Nachfolgend wird eine beispielhafte Ausgestaltung der vorliegenden Erfindung unter Bezugnahme auf die beiliegende Zeichnung genauer beschrieben, die schematisch eine beispielhafte Ausgestaltung des erfindungsgemäßen Systems zeigt.

Das System 10 weist einen Generator 12, eine Rechnereinheit 14, eine Vergleichseinheit 16 und eine Auswertungseinheit 18 auf. Der Generator 12 umfasst, was in der Zeichnung nicht näher dargestellt ist, einen massiven feststehenden Teil, den Stator, der im Prinzip eine große Induktionsspule mit Eisenkern darstellt, einen auf einer Rotorwelle gehaltenen Rotor sowie zwei Lagerböcke, die als Lager für die Rotorwelle dienen. Dem Rotor wird über einen ebenfalls nicht dargestellten Verbrennungsmotor mechanische Leistung zugeführt, wodurch der innerhalb des Stators vorgesehene Rotor auf eine vorbestimmte Betriebsdrehzahl gebracht wird. Der Generator 12 ist als, Asynchrongenerator ausgebildet und umfasst einen Käfigläufer. In jeder Phase der dreipoligen Statorwicklung wird durch Induktion eine Wechselspannung erzeugt. Durch den Versatz der Statorspulen um jeweils 120° wird durch den sich in dem Stator drehenden Rotor ein dreiphasiger Drehstrom erzeugt.

In den Generator 12 gehen Generatoreingangsgrößen ein, die zusammengefasst als mit der Bezugsziffer 20 versehener Pfeil dargestellt sind. Bei diesen Eingangsgrößen handelt es sich um Generatorbetriebswerte, welche die Randbedingungen definieren, unter denen der Generator betrieben wird. Vorliegend umfassen die Generatoreingangsgrößen 20 die Ständerspannung, den Ständerstrom, die Netzfrequenz, die Ständerwicklungstemperatur, die Kühlwassereintrittstemperatur und die Dichtöleintrittstemperatur. Diese Generatoreingangsgrößen 20 werden durch geeignete Sensoren erfasst, wobei die ermittelten Generatoreingangsgrößen durch den mit der Bezugsziffer 22 versehenen Pfeil zusammengefasst sind. Die erfassten Generatoreingangsgrößen 22 werden der Rechnereinheit 14 zugeführt. In der Rechnereinheit 14 werden mit Hilfe eines geeigneten Computerprogramms Soll-Generatorausgangsgrößen basierend auf den erfassten Generatoreingangsgrößen 22 berechnet, wobei die berechneten Soll-Generatorausgangsgrößen in der Zeichnung zusammengefasst durch den mit der Bezugsziffer 24 versehenen Pfeil dargestellt sind. Bei den vorliegend berechneten Soll-Generatorausgangsgrößen 24 handelt es sich um die Soll-Ständerwicklungstemperatur, die Soll-Lagertemperaturen, die Soll-Wellenschwingungsamplituden und die Soll-Wickelkopfschwingungsamplituden. Die in der Rechnereinheit 14 zur Berechnung des Soll-Generatorausgangswertes zu verwendende Software beschreibt die Verknüpfungen zwischen den Generatoreingangs-und den Generatorausgangsgrößen. Die Verknüpfungen können entweder durch theoretische Betrachtungen oder durch Messungen ermittelt werden. Zum Aufstellen der Verknüpfungen werden beispielsweise bei einem intakten Generator die Eingangsgrößen variiert und die Ausgangsgrößen beobachtet. Auf diese Weise können für jede Generatoreingangsgrößenkombination Soll-Generatorausgangsgrößentoleranzbereiche ermittelt werden, in denen keine Störung des Generators 12 feststellbar ist.

Die Generatorausgangsgrößen, die durch den mit der Bezugsziffer 26 bezeichneten Pfeil dargestellt sind, können am Generator 12 durch entsprechende Sensoren erfasst werden. Die auf diese Weise erfassten Ist-Generatorausgangsgrößen sind in der Zeichnung durch den mit der Bezugsziffer 28 bezeichneten Pfeil dargestellt. Unter den Generatorausgangsgrößen sollen hier die Generatorbetriebswerte verstanden werden, die Belastungen der Generatorkomponenten beschreiben, die gegebenenfalls zu einer Störung des Generators 12 führen können. Bei den vorliegend erfassten Ist-Generatorausgangsgrößen 28 handelt es sich um die Ist-Ständerwicklungstemperatur, die Ist-Lagertemperaturen, die Ist-Wellenschwingungsamplituden und die Ist-Wickelkopfschwingungsamplituden.

Sowohl die berechneten Soll-Generatorausgangsgrößen 24 als auch die erfassten Ist-Generatorausgangsgrößen 28 werden der Vergleichseinheit 16 zugeführt und in dieser miteinander verglichen. Das Vergleichsergebnis, das in der durch den mit der Bezugsziffer 30 bezeichneten Pfeil dargestellt ist, wird dann der Auswertungseinheit 18 zugeführt, in der festgestellt wird, ob sich die Differenz zwischen den erfassten Ist-Generatorausgangsgrößen 28 und den berechneten Soll-Generatorausgangsgrößen 24 noch innerhalb der definierten Toleranzbereiche befindet. Ist dies der Fall, so liegt keine Störung des Generators 12 vor, so dass der Betrieb des Generators 12 problemlos fortgesetzt werden kann. Entsprechen die erfassten Ist-Generatorausgangsgrößen 28 hingegen nicht den berechneten Soll-Generatorausgangsgrößen 24, so ist davon auszugehen, dass der Generator 12 in irgendeiner Weise beschädigt ist, woraufhin eine Überprüfung des Generators veranlasst wird.

Die Rechnereinheit 14, die Vergleichseinheit 16 und die Auswertungseinheit 18 sind in der Zeichnung der besseren Anschauung halber als voneinander unabhängige Einheiten dargestellt. Es ist natürlich möglich, diese in einer gemeinsamen Einheit zu integrieren.

Es sollte klar sein, dass die in der Zeichnung dargestellte beispielhafte Ausgestaltung des erfindungsgemäßen Systems 10 sowie das anhand dieses beispielhaften Systems 10 erläuterte erfindungsgemäße Verfahren nicht einschränkend sind. Vielmehr sind Modifikationen und Änderungen möglich, ohne den Schutzbereich der vorliegenden Erfindung zu verlassen, der durch die beiliegenden Ansprüche definiert ist.

## Patentansprüche

1. Ein Verfahren zum automatischen Überwachen eines Generatorbetriebs, das die folgenden Schritte aufweist:
- Erfassen von Generatoreingangsgrößen,
- Berechnen von Soll-Generatorausgangsgrößen (24), basierend auf den erfassten Generatoreingangsgrößen (22) mit Hilfe von Verknüpfungen zwischen den Generatoreingangsgrößen und den Generatorausgangsgrößen, wobei die Verknüpfungen durch theoretische Betrachtungen oder durch Messungen ermittelt werden,
- Aufstellen der Verknüpfungen durch Variation der Eingangsgrößen und Beobachten der Ausgangsgrößen bei einem intakten Generator (12),
- Erfassen der Ist-Generatorausgangsgrößen (28),
- Vergleichen der erfassten Ist- mit dem berechneten Soll-Generatorausgangsgrößen (24) und
- Auswerten der Vergleichsergebnisse.

2. Verfahren nach Anspruch 1,
wobei die Generatoreingangsgrößen die Ständerspannung
und/oder den Ständerstrom
und/oder die Netzfrequenz
und/oder die Ständerwicklungstemperaturen
und/oder die Kühlwassertemperatur
und/oder die Dichtöleintrittstemperatur umfassen.

3. Verfahren nach einem der vorhergehenden Ansprüche, wobei die Generatorausgangsgrößen die Ständerwicklungstemperaturen
und/oder die Lagertemperaturen
und/oder die Wellenschwingungsamplituden
und/oder die Wickelkopfschwingungsamplituden umfassen.

4. Verfahren nach einem der vorhergehenden Ansprüche, wobei das Berechnen der Soll-Generatorausgangsgrößen mit Hilfe einer geeigneten Software erfolgt.

5. Verfahren nach einem der vorhergehenden Ansprüche, wobei die Soll-Generatorausgangsgrößen zumindest teilweise einen Toleranzbereich aufweisen.

6. System zum automatischen Überwachen eines Generatorbetriebs, mit
- Sensoren zum Erfassen von Generatoreingangsgrößen (22),
- einer Rechnereinheit (14), die derart eingerichtet ist, dass basierend auf mittels der Sensoren erfassten Generatoreingangsgrößen (22) Soll-Generatorausgangsgrößen (24) berechnet werden, wobei die Soll-Generatorausgangsgrößen (24) mit Hilfe von Verknüpfungen berechnet werden, wobei die Verknüpfungen durch theoretische Betrachtungen oder durch Messungen ermittelt werden, wobei die Verknüpfungen durch Variation der Eingangsgrößen und Beobachten der Ausgangsgrößen bei einem intakten Generator (12) aufgestellt werden,
- Sensoren zum Erfassen der Ist-Generatorausgangsgrößen (28),
- einer Vergleichseinheit (16), die derart eingerichtet ist, dass die erfassten Ist- mit den berechneten Soll-Generatorausgangsgrößen (24) vergleichen werden, und
- einer Auswertungseinheit (18) zum Auswerten der Vergleichsergebnisse.

7. System nach Anspruch 6,
wobei die Rechnereinheit, die Vergleichseinheit und die Auswertungseinheit einteilig ausgebildet sind.

## Claims

1. Method for automatic monitoring of generator operation, having the following steps:
- recording of generator input variables,
- calculation of nominal generator output variables (24), based on the recorded generator input variables (22) with the aid of logic links between the generator input variables and the generator output variables, with the logic links being determined by theoretical analyses or by measurements,
- definition of logic links by variation of the input variables and by observation of the output variables when the generator (12) is sound,
- recording of the actual generator output variables (28),
- comparison of the recorded actual with the calculated nominal generator output variables (24), and
- evaluation of the comparison results.

2. Method according to Claim 1,
wherein the generator input variables comprise the stator voltage
and/or the stator current
and/or the power supply system frequency
and/or the stator winding temperatures
and/or the cooling water temperature
and/or the sealing oil inlet temperature.

3. Method according to one of the preceding claims,
wherein the generator output variables comprise the stator winding temperatures
and/or the bearing temperatures
and/or the shaft oscillation amplitudes
and/or the end-winding oscillation amplitudes.

4. Method according to one of the preceding claims,
wherein the nominal generator output variables are calculated using suitable software.

5. Method according to one of the preceding claims,
wherein at least some of the nominal generator output variables have a tolerance band.

6. System for automatic monitoring of generator operation, having
- sensors for recording generator input variables (22),
- a computer unit (14) which is designed such that nominal generator output variables (24) are calculated on the basis of generator input variables (22) recorded by means of the sensors, with the nominal generator output variables (24) being calculated with the aid of logic links, and with the logic links being determined by theoretical analyses or by measurements, the logic links being defined by variation of the input variables and by observation of the output variables when the generator (12) is sound,
- sensors for recording the actual generator output variables (28),
- a comparison unit (16), which is designed to compare the recorded actual with the calculated nominal generator output variables (24), and
- an evaluation unit (18) for evaluation of the comparison results.

7. System according to Claim 6,
wherein the computer unit, the comparison unit and the evaluation unit are formed integrally.

## Revendications

1. Procédé de contrôle automatique du fonctionnement d'un générateur, qui a les stades suivants :
- on relève des grandeurs d'entrée du générateur,
- on calcule des grandeurs ( 24 ) de consigne de sortie du générateur sur la base des grandeurs ( 22 ) d'entrée du générateur qui ont été relevées à l'aide de combinaisons entre les grandeurs d'entrée du générateur et les grandeurs de sortie du générateur, les combinaisons étant déterminées par des considération théoriques ou par des mesures,
- on établit les combinaisons en faisant varier les grandeurs d'entrée et en observant les grandeurs de sortie pour un générateur ( 12 ) intact,
- on relève les grandeurs ( 28 ) réelles de sortie du générateur,
- on compare les grandeurs réelles relevées aux grandeurs ( 24 ) de consigne de sortie du générateur, qui ont été calculées et
- on exploite les résultats de la comparaison.

2. Procédé suivant la revendication 1,
dans lequel les grandeurs d'entrée du générateur comprennent la tension statorique
et/ou le courant statorique
et/ou la fréquence du réseau
et/ou les températures d'enroulement statorique
et/ou la température de l'eau de refroidissement
et/ou la température d'entrée de l'huile d'étanchéité.

3. Procédé suivant l'une des revendications précédentes, dans lequel les grandeurs de sortie du générateur comprennent les températures d'enroulement statorique
et/ou les températures des paliers
et/ou les amplitudes d'oscillation d'arbre
et/ou les amplitudes d'oscillation de tête de bobine.

4. Procédé suivant l'une des revendications précédentes, dans lequel on effectue le calcul des grandeurs de consigne de sortie du générateur à l'aide d'un logiciel approprié.

5. Procédé suivant l'une des revendications précédentes, dans lequel les grandeurs de consignes de sortie du générateur comporte au moins en partie une plage de tolérance.

6. Système de contrôle automatique du fonctionnement d'un générateur, comprenant
- des capteurs pour relever des grandeurs ( 12 ) d'entrée du générateur,
- une unité ( 14 ) informatique qui est conçue pour calculer des grandeurs ( 24 ) de consigne de sortie du générateur sur la base de grandeurs ( 22 ) d'entrée du générateur relevées au moyen des capteurs, les grandeurs ( 24 ) de consigne de sortie du générateur étant calculées à l'aide de combinaisons, les combinaisons étant déterminées par des considérations théoriques ou par des mesures, les combinaisons étant établies en faisant varier les grandeurs d'entrée et en observant les grandeurs de sortie pour un générateur ( 12 ) intact,
- des capteurs pour relever des grandeurs ( 28 ) réelles de sortie du générateur,
- une unité ( 16 ) de comparaison, qui est conçue pour comparer les grandeurs réelles relevées aux grandeurs ( 24 ) de consigne de sortie du générateur, qui ont été calculées, et
- une unité ( 18 ) d'exploitation, pour exploiter le résultat de la comparaison.

7. Système suivant la revendication 6,
dans lequel l'unité informatique, l'unité de comparaison et l'unité d'exploitation sont constituées en une seule pièce.
